# EUROPEAN PATENT APPLICATION

(11) **EP 1 642 866 A1**
(43) Date of publication of application: **05.04.2006**
(21) Application number: 04745651.2
(22) Date of filing: 07.06.2004
(51) Int. Cl.: C01B 31/02

(54) **METHOD FOR PRODUCING FULLERENE**

(30) Priority: 10.06.2003 JP 2003165384
(71) Applicant: Frontier Carbon Corporation, Tokyo 104-0031 (JP)
(72) Inventor: TAKEHARA, Hiroaki, Frontier Carbon Corporation, Kitakyushu-shi,Fukuoka 8060004 (JP)
(74) Representative: Vossius & Partner
(86) International application number: PCT/JP2004/007941
(87) International publication number: WO 2004/110927

(57) **Abstract**

A method for producing fullerenes is disclosed wherein a hydrocarbon-containing material gas and an oxygen-containing gas are discharged into a fullerene reactor (11) through a discharge portion (21) of a burner (16) arranged in the fullerene reactor (11), and burned to produce fullerenes. In this method, an average discharge rate at which the hydrocarbon-containing material gas and oxygen-containing gas are discharged through the discharge portion (21) into the fullerene reactor (11) is set at a rate higher than 0.75 m/s but not higher than 10 m/s, preferably at a rate not lower than 1 m/s but not higher than 6 m/s, thereby increasing fullerene yield relative to carbon in the hydrocarbon-containing material gas and fullerene content in produced soot-like material. With this method, production volume of fullerenes per unit time can be increased when compared with the conventional methods.

## Description

### TECHNICAL FIELD

The present invention relates to a method for producing fullerenes, capable of increasing production of fullerenes by improving yield of fullerenes and fullerene content in generated soot-like material by increasing supply of materials for fullerenes.

### BACKGROUND ART

"Fullerenes" is a general term to represent the third carbon allotrope next to diamond and graphite, and indicates a group of closed cage carbon molecules, such as C₆₀ and C₇₀. Besides C₆₀ and C₇₀, fullerenes are known as, for example, C₇₄, C₇₆, C₇₈, C₈₀, C₈₂, C₈₄, C₈₆, C₈₈, C₉₀, C₉₂, C₉₄ and C₉₆, and include any closed cage carbon molecule with no upper limit on the carbon number.
Existence of fullerenes was finally confirmed in 1990 which is quite recent, and fullerenes are a relatively new carbon material. Fullerenes are confirmed to have special physical properties because of their unique molecular structures, and used in a wide range of applications in, for example, superhard materials, pharmaceuticals, superconducting materials and semiconductor processing, and, innovative applications have been developed rapidly. Among fullerenes, particularly C₆₀ and C₇₀ are relatively easy to synthesize, and thus future demand thereof is expected to grow explosively. Although various methods for synthesizing fullerenes have been proposed up to the present, methods which enable mass production of fullerenes at a low cost have not been established. Among these methods, a combustion method is known as one of the most cost-effective and efficient methods for producing fullerenes.

The combustion method is a method in which a carbon-containing compound is burned in flame formed in a fullerene reactor to produce fullerenes, and an identical carbon-containing compound can be used as fuel for combustion and as a material for fullerenes.
For producing fullerenes, conditions of the flame at a time of burning the carbon-containing compound are important. The conditions of the flame can be adjusted by controlling one or more of parameters selected from elemental ratio of carbon in the carbon-containing compound with respect to oxygen at the time of burning of the carbon-containing compound (C/O ratio), pressure in the fullerene reactor, diluent concentration at the time of burning the carbon-containing compound, temperature, retention time of the carbon-containing compound in the flame, and gas velocity of a mixed gas containing a gas of the carbon-containing compound and an oxygen gas at a burner.

For example, Published Japanese Translation of PCT International Application No. H06-507879 (hereinafter referred to as Patent Document 1) describes that soot-like material containing fullerenes can be produced by reducing pressure in a fullerene reactor and controlling C/O ratio in a range of 0.72 to 1.07, diluent concentration in a range of 0 to 40 mol%, temperature in a range of 1400 to 3000K and gas velocity in a range of 14 to 75 cm/s.
Moreover, U.S. Patent Application Publication No. 2003/0044342 (hereinafter referred to as Patent Document 2) discloses a burner made of porous refractory materials, by which wide ranges of fuel/oxidant (e.g., air) ratio and gas velocity are stabilized and flame stability is improved. It is also disclosed that by feeding toluene to this burner at an average of 80 ml/min, 200 g of soot-like material (solid carbon product) was produced per hour, and fullerenes contained in the soot-like material were extracted with toluene at an amount of about 18% by mass (fullerenes: 36 g), at the maximum of 30% by mass (fullerenes: 60 g).

However, by the method disclosed in Patent Document 1, even when the flame conditions are controlled, fullerene content in produced soot-like material and fullerene yield with respect to carbon in a carbon-containing compound are as low as 0.003 to 7% by mass and 0.002 to 0.24% by mass, respectively. Another drawback is that, since the gas velocity from a burner is low, fuel input at a time is limited, and thus fullerene production per unit time is also low. Furthermore, if the gas velocity is simply raised, the metallic burner as disclosed in Patent Document 1 has a drawback that a flame blowoff phenomenon occurs, and thus stable flames cannot be maintained.
Furthermore, when the burner disclosed in Patent Document 2 is used and toluene is fed to the burner at a rate of 80 ml/min as disclosed in the description, based on calculation considering that a diameter of the burner is 10.5 inches, an average discharge rate of a gas from the burner is approximately 50 cm/s, which falls in the range of an average discharge rate disclosed in Patent Document 1. In addition, there is no concrete description or suggestion as to how much the average discharge rate of the gas can be raised. Even if the discharge rate of the gas from the burner can be raised, heat load in a production furnace increases and temperature of the gas exhausted from the production furnace rises. Therefore, before introduction of the gas to a recovery device (e.g., a bag filter) for recovering the soot-like material containing fullerenes, the temperature of the gas needs to be lowered to or below heat-resistance temperature of the recovery device, but the device cannot be cooled by simple thermal emission. Here, as described in Patent Document 2, when a general heat exchanger is used, there has been a drawback that the heat exchanger is clogged up with the soot-like material contained in the gas in a short time, and thus operation becomes substantially impossible.

For the above reasons, a method has been sought by which fullerene yield is improved and fullerene production per unit time is raised by putting more fuel into one device (burner), and also by which soot-like material containing fullerenes produced in the fullerene reactor and a gas containing the soot are efficiently cooled at the same time and then introduced into the soot-like material recovery device.
The present invention has been made in view of the above situation, and an object of the present invention is to provide a method for producing fullerenes, capable of increasing the fullerene production per unit time compared with conventional methods by increasing the supply of materials for fullerenes, and also capable of carrying out stable fullerene production for a long period of time.

### DISCLOSURE OF INVENTION

A method for producing fullerenes according to the present invention for attaining the above object is a method for producing fullerenes in which a hydrocarbon-containing material gas (hydrocarbon-containing gas as a material) and an oxygen-containing gas are discharged from a discharge portion provided in a fullerene reactor into the fullerene reactor and burned, wherein an average discharge rate of the hydrocarbon-containing material gas and the oxygen-containing gas discharged from the discharge portion into the fullerene reactor is higher than 0.75 m/s but not higher than 10 m/s. Thus, fullerene production per unit time can be increased.
Here, the average discharge rate of the gases discharged from the discharge portion is obtained by dividing a total volume of the hydrocarbon-containing material gas and the oxygen-containing gas when being supplied into the fullerene reactor by a cross-sectional area of a region where minute discharge holes are distributed (i.e., the discharge portion) in the fullerene reactor. However, the average discharge rate varies with one or more of pressure in the fullerene reactor, gas temperature at the time of discharge, and combustion C/O ratio. In the present invention, a gas volume at the time of discharge used for calculation of a gas discharge rate is converted into a volume at a temperature of 298K.
Since the average discharge rate is obtained by division by the cross-sectional area of the region where the minute discharge holes are distributed (i.e., the discharge portion), even if the configuration of the discharge portion (e.g., at least one of the inside diameter, arrangement pitch and the number of the discharge holes) changes, the average discharge rate from the discharge portion can be handled as constant. Thus, the average discharge rate is preferable as an operating parameter of the fullerene reactor.

When a gas in the same volume is discharged from the discharge holes in the same number, as the size of the discharge holes becomes small, the discharge rate becomes high. Thus, discharge rate at which the hydrocarbon-containing material gas and the oxygen-containing gas are actually discharged from the discharge holes is higher than the average discharge rate of these gases from the discharge portion. However, in producing fullerenes, it is preferable to adjust the configuration of the discharge portion, namely the diameter and the number of the discharge holes, so that the discharge rate from the discharge holes approaches the average discharge rate from the discharge portion. With regard to the relation between the discharge rate from the discharge holes and the average discharge rate from the discharge portion, a value of (the discharge rate from the discharge holes/the average discharge rate from the discharge portion) is preferably 10 or less, more preferably 5 or less, and still preferably 2 or less.
The value of (the discharge rate from the discharge holes/the average discharge rate from the discharge portion) can be made to be 1 by making a device (e.g., one or both of the discharge portion and the fullerene reactor) have a special configuration. However, in devices used generally, the value of (the discharge rate from the discharge holes/the average discharge rate from the discharge portion) becomes 1 or more.
By regulating the average discharge rate of the hydrocarbon-containing material gas and the oxygen-containing gas supplied into the fullerene reactor through the discharge portion in a certain range, the fullerene production per unit time can be increased. Moreover, fullerene precursors generated from the hydrocarbon-containing material gas heated in a combustion gas flow are restricted from moving nonuniformly in the combustion gas flow, and thus retention time of the fullerene precursors in the combustion gas flow can be uniform and also the fullerene precursors can be heated uniformly at high temperatures. As a result, it is understood that fullerene-producing reaction can be generated stably.
Therefore, for example, when fullerenes are produced by the method of the present invention using the 10.5-inch-diameter burner made of the porous refractory materials described in Patent Document 2, 330 to 3000 g of soot-like material can be produced per hour, and furthermore, fullerene content in the soot-like material can be in a range of 10% by mass to 30% by mass. As a result, for example, when the fullerene content in the soot-like material is 20% by mass, the fullerene production per hour is in an amount of about 66 to 600 g, which has been remarkably increased compared with conventional methods. In addition, when the diameter of the burner is enlarged, the fullerene production can be increased as a matter of course.

Here, when the average discharge rate at which the hydrocarbon-containing material gas and the oxygen-containing gas are discharged from the discharge portion into the fullerene reactor is 0.75m/s or lower, not only the fullerene production per unit time decreases but also formation of a noticeable jet flow of the hydrocarbon-containing material gas and the oxygen gas on a downstream side of the discharge portion becomes difficult. Therefore, formation of the combustion gas flow running from an upstream side to a downstream side of the fullerene reactor is not notably promoted, and a self-circulating flow becomes easy to be generated in the combustion gas, which is undesirable. When the average discharge rate from the burner is such a low rate, the discharge rate from the burner becomes lower than a combustion rate of the fuel. Thus in a prolonged operation, a phenomenon in which the flame flows back into the burner, namely a backfire phenomenon, occurs, and therefore continuation of operation becomes impossible.
On the other hand, when the average discharge rate at which the hydrocarbon-containing material gas and the oxygen-containing gas are discharged from the discharge portion into the fullerene reactor exceeds 10m/s, the jet flow of the hydrocarbon-containing material gas and the oxygen-containing gas formed on the downstream side of the discharge portion become so strong that a turbulent flow is more likely to be formed.
Thus, the combustion gas is stirred by the turbulent flow generated in the hydrocarbon-containing material gas and the oxygen-containing gas, and a circulating flow is undesirably formed in the combustion gas.
For the above reasons, the average discharge rate at which the hydrocarbon-containing material gas and the oxygen-containing gas are discharged from the discharge portion into the fullerene reactor is specified as higher than 0.75 m/s but not higher than 10 m/s.

Furthermore, in the method for producing fullerenes, according to the present invention, it is preferable that the average discharge rate of the hydrocarbon-containing material gas and the oxygen-containing gas discharged from the discharge portion is in a range of 1 m/s (still preferably 1.6 m/s) to 6 m/s. Accordingly, formation of the combustion gas flow running from the upstream side to the downstream side of the fullerene reactor is noticeably promoted, the backfire phenomenon is prevented, and moreover a stable jet flow is formed.
Still furthermore, in the method for producing fullerenes according to the present invention, it is preferable that (V·P) is in a range of 30 to 1000, with V m/s being the average discharge rate of the hydrocarbon-containing material gas and the oxygen-containing gas and P torr being a pressure in the fullerene reactor. By controlling the product of the average discharge rate V m/s and the pressure P torr in the fullerene reactor in the above range, the hydrocarbon-containing material gas and the oxygen-containing gas can be burned in a diluted state in the fullerene reactor. Thus, a condition which enables further increase of the fullerene production per unit time can be specified.
If the product of the average discharge rate V m/s and the pressure P torr in the fullerene reactor is less than 30, for example, when the average discharge rate is 1.5 m/s and the pressure in the fullerene reactor is less than 20 torr, the pressure in the fullerene reactor becomes advantageous for fullerene production. However, since the pressure in the reactor increases due to increase of slight pressure loss in subsequent piping and in the bag filter, maintaining a predetermined pressure becomes difficult.
Meanwhile, if the product of the average discharge rate V m/s and the pressure P torr in the fullerene reactor exceeds 1000, for example, when the average discharge rate is 6 m/s and the pressure in the fullerene reactor exceeds 167 torr, the hydrocarbon-containing material gas is thermally decomposed and soot-producing reaction becomes noticeable in a production process of fullerenes and soot except fullerenes. Consequently, fullerene production rate deteriorates.
Because of the above reasons, the product of the average discharge rate V m/s and the pressure P torr in the fullerene reactor is specified in a range with a lower limit of 30, preferably 80, still preferably 120 and an upper limit of 1000, preferably 500, still preferably one of 400, 300, 200 and 150. In this case, a backfire may occur when (V·P) exceeds 400. Therefore, it is preferable that the hydrocarbon-containing material gas and the oxygen-containing gas are discharged respectively, without being premixed, into the fullerene reactor using a separate-type burner having independent discharge ports, and then the gases are burned in the reactor.

Still furthermore, in the method for producing fullerenes according to the present invention, it is preferable that a gas containing a soot-like material introduced into a soot-like material recovery device from the fullerene reactor has been cooled to be in a temperature range of 200°C to 700°C.
The gas containing the soot-like material having a temperature exceeding 700°C is not preferable because the temperature is equal to or higher than a limit of a heat-resistance temperature of the soot-like material recovery device made of normal industrial materials, and the device may be damaged. Fullerenes sublime at about 700°C or higher under reduced pressure and exist as a gaseous matter. Therefore, it is also not preferable that the temperature in the recovery device (gas-solid separation device) exceeds 700°C because fullerenes in a gas state pass through the recovery device with the gas and consequently fullerene content in the soot-like material decreases.
Moreover, if the gas containing the soot-like material is lower than 200°C, toxic polycyclic aromatic hydrocarbons (PAH) are mixed in the soot-like material as a solid matter and are recovered by the recovery device, which is not preferable.
Because of the above reasons, to increase the fullerene content in the soot-like material without damaging the soot-like material recovery device, the temperature of the gas containing the soot-like material before being introduced into the recovery device is set in a range of 200°C to 700°C, preferably in a range with a lower limit of 300°C, more preferably 400°C, and an upper limit of 600°C, more preferably 500°C. By controlling the temperature of the gas introduced into the fullerene recovery equipment in the above range, equipment life becomes long, and moreover, the fullerene recovery rate is improved.
In the method for producing fullerenes wherein the temperature of the gas discharged from the fullerene reactor is controlled in a range of 200°C to 700°C, it is preferable that the gas containing the soot-like material exhausted from the fullerene reactor is cooled at a cooling rate of 1000 °C/s or higher until reaching the recovery device. Here, if the cooling rate of the gas containing the soot-like material is lower than 1000 °C/s, the retention time of the gas until the gas reaches the soot-like material recovery device must be extended. Thus, length of piping system of the device is substantially extended to ensure cooling time, which is not economical. The cooling rate in this case is a value obtained by dividing a temperature difference between a maximum combustion temperature in the reactor (theoretical adiabatic flame temperature) and a gas temperature at an inlet of the soot-like material recovery device by the retention time of the gas after the gas is discharged from the discharge portion and until the gas reaches the recovery device. Although the retention time of the gas is defined by volume of the device and a solid volume flow rate of the gas, it is difficult to actually measure the solid volume flow rate of the gas since the solid volume flow rate of the gas constantly varies with the temperature and the pressure. Here, the retention time of the gas is calculated by obtaining an average temperature of the theoretical adiabatic flame temperature and the gas temperature actually measured at the inlet of the soot-like material recovery device, calculating the solid volume flow rate (m³/s) of the exhaust gas under a reactor pressure at the obtained average temperature, and then dividing the volume (m³) of the device including the reactor and the piping by the solid volume flow rate of the exhaust gas. For measurement of the maximum combustion temperature (and temperatures at other high-temperature areas) of the reactor, an optical pyrometer may be used. The gas temperature at the inlet side of the recovery device may be measured by usual methods using a thermocouple.
Furthermore, since the cooling rate of the gas containing the soot-like material is preferably as high as possible, the upper limit is not specified. However, because of the restrictions of the device, the upper limit of the cooling rate is approximately 2000°C/s in practice.
Because of the above reasons, the cooling rate of the gas containing the soot-like material is set to 1000°C/s or higher to prevent damage of the soot-like material recovery device and also to realize the economical device configuration, however, the cooling rate is preferably 2000°C/s or higher, more preferably 3000°C/s or higher.

In the method for producing fullerenes according to the present invention, it is preferable that the gas containing the soot-like material exhausted from the fullerene reactor is cooled by forming a swirling flow in a pipe with a periphery cooled by a cooling medium in a case where the gas is cooled to a predetermined temperature. Since the gas containing the soot-like material is cooled by forming the swirling flow, contact position of the gas and an inner wall of the pipe can be constantly changed while the gas in contact with the inner wall of the pipe is frequently changed, and thus the heat exchange efficiency between the gas and the inner wall of the pipe can be improved. As a result, the temperature of the gas as a whole can be uniformly lowered. In addition, since a high-speed gas stream runs through the inner wall area of the pipe, adhesion of the soot-like material can be significantly reduced.
Furthermore, in the method for producing fullerenes according to the present invention, it is preferable that an elemental ratio of carbon in the hydrocarbon-containing material gas with respect to oxygen in the oxygen-containing gas is in a range of 1.00 to 1.56 at a time of burning of the hydrocarbon-containing material gas. By controlling the elemental ratio, namely C/O ratio, in the above range, the fullerene production can be maximized. If the C/O ratio exceeds 1.56, the amount of the hydrocarbon-containing material gas to be burned decreases and the temperature of the combustion gas does not become high, and consequently the soot-like material is mainly formed from the hydrocarbon-containing material gas. Accordingly, the production of the fullerene precursors decreases, and moreover, the frequency of the collisions among the fullerene precursors decreases and the fullerene production rate lowers. As a result, the fullerene content in the soot-like material decreases extremely.
On the other hand, if the C/O ratio is less than 1.00, the amount of the hydrocarbon-containing material gas to be burned increases, thus the combustion temperature of the gas becomes high and the fullerene production rate becomes high, and consequently the fullerene content in the soot-like material increases. Meanwhile, the production of the soot-like material itself decreases, and thus the final fullerene production decreases. Accordingly, the C/O ratio less than 1.00 is not preferable.
According to the above reasons, the C/O ratio preferably has the lower limit of 1.00, more preferably 1.08, still preferably 1.09, and the upper limit of 1.56, more preferably 1.36 and still preferably 1.23.

Still furthermore, in the method for producing fullerenes according to the present invention, it is most preferable that the oxygen-containing gas has an oxygen concentration of 99% or more. The amount of the combustion gas generated in the fullerene reactor is reduced by making the composition of the oxygen-containing gas substantially only oxygen, and thereby retained heat per unit volume of the combustion gas can be increased. As a result, the temperature of the combustion gas can be high, for example, in a range with a lower limit of 1600°C, preferably 1700°C, and an upper limit of 2100°C, preferably 1900°C. Moreover, as decomposition of the hydrocarbon-containing material gas is promoted and the production rate of the fullerene precursors becomes higher, reaction among the fullerene precursors is promoted, and consequently it becomes possible to improve the fullerene production rate.
In the method for producing fullerenes according to the present invention, it is preferable that the hydrocarbon-containing material gas is preheated before being discharged from the discharge portion into the fullerene reactor. Thereby, the hydrocarbon-containing material gas is prevented from being liquefied during transportation, and thus the operation is stabilized and also the combustion temperature of the fullerene reactor can be elevated.
Furthermore, in the method for producing fullerenes according to the present invention, it is preferable that the oxygen-containing gas is preheated before being discharged from the discharge portion into the fullerene reactor. Thereby, the combustion temperature at the time of burning of the hydrocarbon-containing material gas in the fullerene reactor can be raised and the fullerene production efficiency can be improved.
Preheating temperature of the hydrocarbon-containing material gas is preferably equal to or higher than a vaporization temperature of hydrocarbons as a material at an operating pressure, more preferably 10°C or more, still preferably 20°C or more, higher than the vaporization temperature. It is also preferable to preheat the oxygen-containing gas to a temperature as high as around the preheating temperature of the hydrocarbon-containing material gas, but preferably equal to or lower than an autoignition temperature of a mixed gas at the operating pressure, still preferably 10°C or more lower than the autoignition temperature.
Here, it is possible to adjust the temperature of the mixed gas by varying the preheating temperatures of the hydrocarbon-containing material gas and the oxygen-containing gas, however, the temperature difference between these gases is preferably as small as possible, and preferably within 50°C even if there is any temperature difference.

Still furthermore, in the method for producing fullerenes according to the present invention, it is preferable that a burner with the discharge portion is provided at an upper portion of the fullerene reactor, and an exhaust portion for exhausting the gas containing the soot-like material produced in the fullerene reactor is provided at a lower portion of the fullerene reactor. By such an arrangement, the soot-like material falling from the upper portion of the reactor does not cover the burner, and thus the discharge portion of the burner does not get clogged up.
By the above-described method according to the present invention, the fullerene content in the soot-like material produced in the fullerene reactor can be more than 7% by mass but not more than 50% by mass. As described above, the method of the present invention is capable of increasing the fullerene content in the soot-like material compared with conventional methods (7% or less by mass in the conventional methods).

### BRIEF DESCRIPTION OF DRAWINGS

FIG. 1 is an explanatory diagram of fullerene producing equipment to which a fullerene producing method according to one embodiment of the present invention is applied.
FIG. 2 is an explanatory diagram of a modified embodiment of the fullerene producing equipment.
FIG. 3 is an explanatory diagram illustrating relations among fullerene concentration, fullerene production and burner flow rate according to experiments 1 to 3.
FIG. 4 is an explanatory diagram illustrating relations among fullerene concentration, fullerene production and burner flow rate according to comparative experiments 1 to 3.
FIG. 5 is an explanatory diagram illustrating relations among fullerene concentration, fullerene production and pressure in a reactor according to experiments 3 to 6.
FIG. 6 is an explanatory diagram illustrating relations among fullerene concentration, fullerene production and elemental ratio (C/O ratio) according to experiments 7 to 16.

### BEST MODE FOR CARRYING OUT THE INVENTION

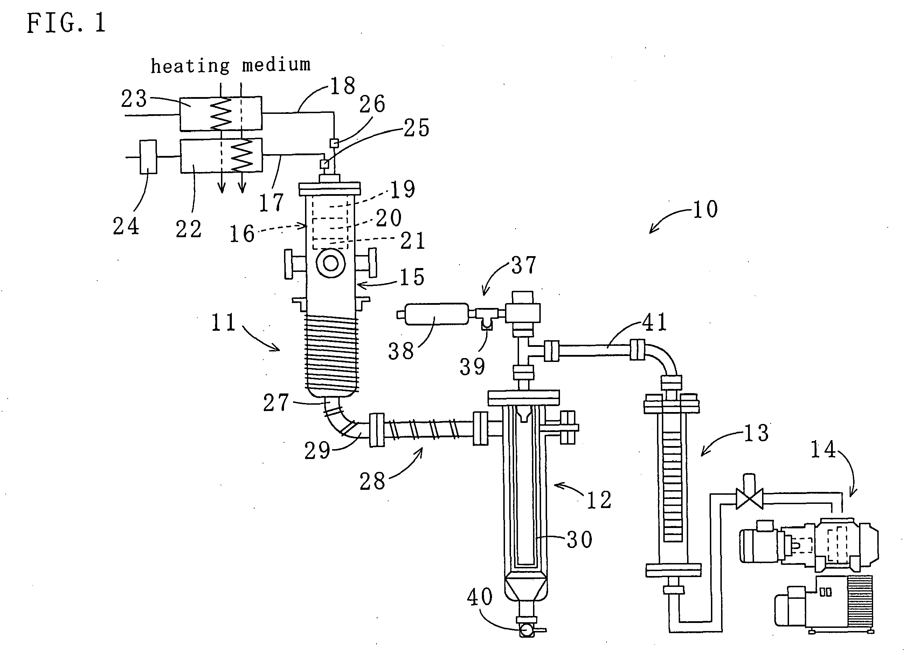

Next, embodiments of the present invention will be described hereunder with reference to the accompanying drawings for the present invention to be understood.
As illustrated in FIG. 1, fullerene producing equipment 10 to which a method for producing fullerenes according to one embodiment of the present invention is applied comprises a fullerene reactor 11, a recovery device 12 for recovering a soot-like material containing fullerenes from a gaseous substance exhausted from the fullerene reactor 11, a gas cooler 13 for cooling gases exhausted from the recovery device 12 and a decompressor 14 having a vacuum pump for vacuuming the gases cooled by the gas cooler 13. Hereafter, these will be described further in detail.
The fullerene reactor 11 has, for example, a cylindrical reactor body 15 and a burner 16 provided on an upper end side of the reactor body 15. The reactor body 15 is made of, for example, heat resisting steel such as stainless steel, and has a lining of refractories such as alumina refractory bricks and unshaped alumina refractories on a part of or on the whole of the interior thereof. This structure allows temperature of a fullerene-producing area to be raised, which is favorable for fullerene production.
Moreover, the reactor body 15 is disposed to look vertically downward to prevent the soot-like material produced in the reactor from falling on a surface of the burner 16 and disturbing prolonged stable operation. However, when the prolonged operation is not conducted, it is not necessary to specify the reactor body to look vertically downward, and the reactor body may look vertically upward or obliquely upward.

The burner 16 comprises hydrocarbon-containing material gas supply piping 17 for supplying a hydrocarbon-containing material gas, oxygen-containing gas supply piping 18 for supplying oxygen required for burning of a fuel gas contained in the hydrocarbon-containing material gas, a mixing chamber 19 for preparing a mixed gas from the supplied hydrocarbon-containing material gas and oxygen-containing gas, an accumulator 20 for retaining the obtained mixed gas at a predetermined pressure (e.g., in a range of 50 to 180 torr, preferably in a range of 100 to 150 torr), and a discharge portion 21 provided with a plurality of discharge holes not shown (e.g., each bore diameter of the holes is 0.1 to 5 mm, preferably 0.2 to 3 mm) from which the mixed gas is discharged.
As to the discharge portion 21, various configurations may be employed, however, configurations in which a multiplicity of discharge holes with small bore diameters are gathered are preferable for obtaining a favorable gas flow. For example, in a case where a multiplicity of discharge holes with bore diameters of 0.1 to 5 mm are provided, the sum of opening areas of the discharge holes preferably occupies 10 to 95%, still preferably 50 to 95%, of a cross-sectional area of a region of the discharge portion 21. Furthermore, the mixing chamber 19, the accumulator 20 and the discharge portion 21 may be made of, for example, heat resisting steel such as stainless steel. The discharge portion 21 may be made using porous sintered bodies of ceramics (e.g., zirconia, cordierite or carbon), which enables improvement of heat resistance of the discharge portion 21 and the prolonged stable operation.
Moreover, without providing the mixing chamber 19, the hydrocarbon-containing material gas and the oxygen-containing gas may be introduced separately into the fullerene reactor 11.

The hydrocarbon-containing material gas supply piping 17 and the oxygen-containing gas supply piping 18 are provided with heat exchangers 22 and 23, respectively, so that thermally treated (preheated) hydrocarbon-containing material gas and oxygen-containing gas are supplied to the burner 16. Furthermore, a vaporizer 24 for gasifying hydrocarbons as a material can be disposed in the hydrocarbon-containing material gas supply piping 17 on an upstream side of the heat exchanger 22. Preferably, both of the heat exchangers 22 and 23 are used, however, in some cases, either one of the heat exchangers 22 and 23 may be omitted so that either one of the hydrocarbon-containing material gas and the oxygen-containing gas is preheated. Furthermore, flow regulators 25 and 26 are provided respectively in distal portions of the hydrocarbon-containing material gas supply piping 17 and the oxygen-containing gas supply piping 18 for adjusting flows of the hydrocarbon-containing material gas and the oxygen-containing gas supplied to the burner 16.
A discharge portion having an exhaust port 27 for a high-temperature exhaust gas containing fullerenes and the soot-like material produced in the fullerene reactor 11 is provided on a lower end side of the fullerene reactor 11. The recovery device 12 is connected to the exhaust port 27 via a gas cooling unit 28. In this embodiment, the gas cooling unit 28 has a pipe 29 of a predetermined length having a peripheral wall cooled to a certain temperature. A high-temperature turbulent flow containing the soot-like material is deprived of heat from the circumference by passing through the pipe 29 and is cooled to a predetermined temperature (e.g., equal to or higher than liquefaction temperature of the hydrocarbons as a material and equal to or lower than solidification temperature of fullerenes, i.e., in a range of 200 to 700°C, preferably in a range of approximately 300 to 500°C), and subsequently the flow is fed into the recovery device 12.

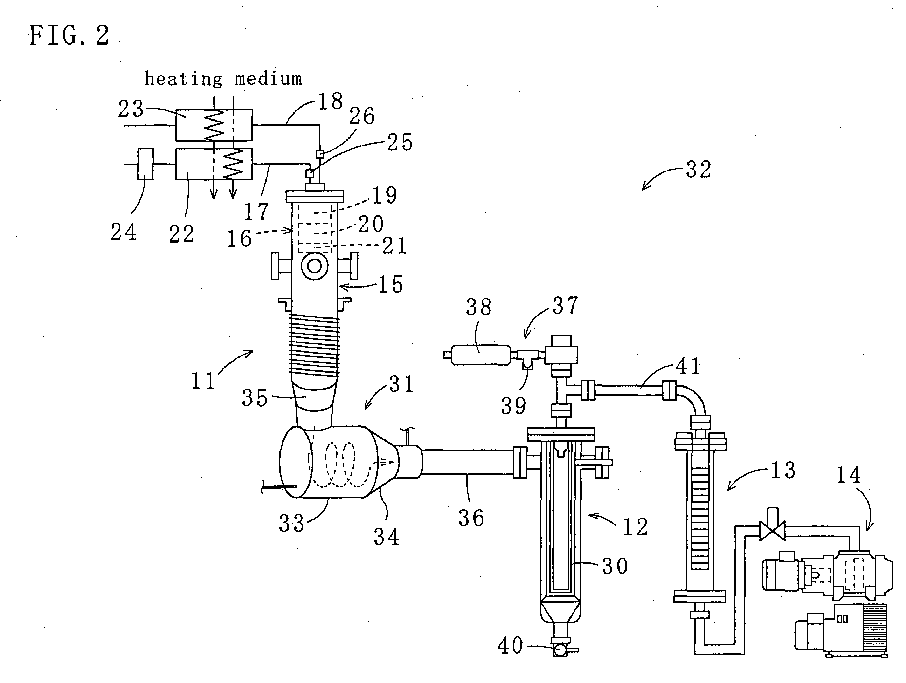

Temperature of the gas containing the soot-like material exhausted from the fullerene reactor 11 varies with length and cooling efficiency of the fullerene reactor 11. Here, if the gas cooling unit only comprises the predetermined-length pipe 29 having the peripheral wall cooled to a predetermined temperature, the cooling efficiency is poor. Therefore, if an average discharge rate of the gas discharged from the burner 16 is high (e.g., 200 cm/s or above), the gas temperature can be as high as more than 1000°C. Accordingly, for cooling the high-temperature gas to the upper temperature limit of the recovery device 12 or lower, e.g., in a range of approximately 400 to 600°C, which is an upper temperature limit of a high-temperature, heat-resistant filter 30 of the recovery device 12, the configuration of the gas cooling unit is especially important.
In such a case, fullerene producing equipment 32 as illustrated in FIG. 2 is used, having, instead of the gas cooling unit 28, a cyclone-type gas cooling unit (cooler) 31 which turns the fullerene-containing, high-temperature gas into a swirling flow and passes the gas through a passage. The gas cooling unit 31 comprises a pipe having a cylindrical tube portion 33 on the upstream side thereof and a tapered portion 34 on the downstream thereof. The tapered portion 34 is connected to the tube portion 33 and tapered toward a downstream end. An outer periphery of the gas cooling unit 31 is covered with a water-cooling jacket or a cooling pipe not shown. In this embodiment, the tube portion 33 has an inside diameter of 600 mm and a length of about 1500 mm. However, the dimensions may be changed as a matter of course, as long as the tube portion 33 is capable of cooling the gas generated from the reactor at 100 °C/s or higher.

An exhaust portion 35 of the fullerene reactor 11 is connected to the tube portion 33 of the gas cooling unit 31 in a tangential direction of the tube portion 33, and fullerene-containing gas exhausted into the tube portion 33 through the exhaust portion 35 swirls along the interior surface of the pipe and is cooled while forming the swirling flow, and then the fullerene-containing gas is exhausted downstream. A carrier pipe 36 is connected to a downstream end portion of the tapered portion 34, and connected to the recovery device 12. Accordingly, heat exchange efficiency between the gas and the inner wall of the pipe is improved and the gas temperature can be lowered to desired temperatures, and moreover, the temperature of the entire gas can be lowered uniformly.
Furthermore, in this case, contact position between the gas and the inner wall of the pipe is constantly varied, and thus the soot-like material floating in the gas or combustion residues mixed in the gas generated in the fullerene reactor 11 can be prevented from adhering to the inner wall of the pipe. Accordingly, the inner wall of the pipe is easily exposed, and thus the heat exchange efficiency between the gas and the inner wall of the pipe can be maintained at a high level. At this time, the flow rate of the swirling gas passing inside the pipe is preferably high (e.g., 15 to 300 m/s), still preferably with a lower limit of 35 m/s and an upper limit of 150 m/s.
By using the cyclone-type gas cooling unit 31 as above, the gas containing the soot-like material exhausted from the fullerene reactor 11 can be cooled at a cooling rate of 1000 °C/s or higher until reaching the recovery device 12. This cooling rate is obtained by dividing a temperature difference between a maximum combustion temperature in the fullerene reactor 11 and a gas temperature at an inlet of the recovery device 12 by a retention time of the gas until the gas reaches the recovery device 12 from the discharge portion 21.
Therefore, the length of the carrier pipe 36 can be shortened without considering a distance at which the gas temperature can be cooled to the above-mentioned temperature. In addition, the gas can be fed in such a manner that the swirling flow is also generated in the carrier pipe 36 to prevent the soot-like material from adhering to the inner wall of the pipe.

As illustrated in FIG. 1, the recovery device 12 is provided for separating solids from gas stream in the gas stream containing the soot-like material generated from the fullerene reactor 11, and comprises the high-temperature, heat-resistant filter 30 provided therein. Since the high-temperature, heat-resistant filter 30 allows the hydrocarbon-containing material gas and combustion gas to pass therethrough and recovers fullerenes and the soot-like material, the filter 30 has the heat resistance in a range of 400 to 600°C depending on the gas temperature.
The recovery device 12 has a bag filter configuration applied in general dirt collectors etc., and the bag filter is made of the above-mentioned high-temperature, heat-resistant filter 30. The high-temperature, heat-resistant filter 30 includes, such as sintered metal filters manufactured by Nihon Pall Ltd., and sintered metal filters manufactured by Fuji Filter Mfg. Co., Ltd. Size of filter openings is appropriately chosen depending on combustion conditions for fullerene production and characteristics of the soot-like material.
In a case where the gas stream containing the soot-like material is cooled to around 150°C or below by the gas cooling unit, the filter inside the recovery device 12 need not be the high-temperature, heat-resistant filter, but instead, for example, generally-used filters made of nylon or tetrafluoroethylene can be used.

In an upper portion of the recovery device 12, a backwashing mechanism 37 for regularly removing adhered solidified matter (e.g., the soot-like material and fullerenes) is provided.
The backwashing mechanism 37 comprises a tank 38 for accumulating a high pressure inert gas (such as nitrogen or argon) or the like and an electromagnetic valve 39. By routinely opening the electromagnetic valve 39 for short periods at fixed intervals, the inert gas is fed into the high-temperature, heat-resistant filter 30 so that the solidified matter adhered to the periphery falls downward, and by opening a discharge valve 40, the solidified matter is discharged outside. In the upper portion of the recovery device 12, there is provided gas exhaust piping 41 for exhausting the gases having passed through the high-temperature, heat-resistant filter 30 out of the recovery device 12. The gas exhaust piping 41 of the recovery device 12 is provided with the gas cooler 13. The gas cooler 13 has a configuration identical with or similar to those of normal heat exchangers and lowers the temperature of the gases which enter the decompressor 14 to reduce stress on the decompressor 14. Moreover, moisture of the hydrocarbon-containing material gas and the combustion gas contained in the gas stream is liquefied and discharged from a drain underneath.
The decompressor 14 succeeding the gas cooler 13 comprises a normal vacuum pump. Since sublimation temperatures of fullerenes vary also with degree of vacuum, the decompressor 14 is selected so that pressures at which fullerenes are recovered most efficiently can be obtained according to the amounts of carbonaceous materials, oxygen and the inert gas supplied.

By introducing the hydrocarbon-containing material gas and oxygen-containing gas into the mixing chamber 19 while supply of these gases is controlled by the respective flow regulators 25 and 26, it is possible to prepare the mixed gas having C/O ratio, which is the elemental ratio of carbon in the material hydrocarbons with respect to oxygen at the time of burning the hydrocarbon-containing material gas, controlled to have a lower limit of 1.00, preferably 1.08, more preferably 1.09 and an upper limit of 1.56, preferably 1.36, more preferably 1.23.
Then, by retaining the prepared mixed gas in the accumulator 20 and discharging the gas from the discharge portion 21, the mixed gas can be supplied stably into the reactor body 15 at an average discharge rate, for example, higher than 0.75 m/s but not higher than 10 m/s, preferably in a range of 1 m/s to 6 m/s.
The inside of the reactor body 15 can be exhausted by the decompressor 14 via the pipe 29 connected to the exhaust port 27, and thus the inside of the reactor body 15 can be maintained under reduced pressure, for example, in a range of 20 torr to 180 torr, preferably with a lower limit of 30 torr and an upper limit of 100 torr, still preferably, at 80 torr.
Given that an average discharge rate of the hydrocarbon-containing material gas and the oxygen-containing gas is V m/s and a pressure in the fullerene reactor is P, (V·P) is controlled in a rage of 30 to 1000.
Accordingly, while the mixed gas discharged from the discharge portion 21 into the reactor body 15 is burned under the reduced pressure, the produced combustion gas is exhausted out of the reactor body 15 through the exhaust port 27.

Next, a method for producing fullerenes according to one embodiment of the present invention will be described in detail.
As the hydrocarbon-containing material gas, a toluene gas is used, and as the oxygen-containing gas, an oxygen gas having an oxygen concentration of 99 % or more (hereinafter also referred to as a pure oxygen gas) is used. The amount of the toluene gas and the amount of the pure oxygen gas introduced into the mixing chamber 19 are controlled by the flow regulators 25 and 26 respectively to prepare the mixed gas so that the elemental ratio (C/O ratio) of carbon contained in toluene with respect to the oxygen at a time of burning the toluene gas may have the lower limit of 1.00, preferably 1.08, more preferably 1.09, and the upper limit of 1.56, preferably 1.36, more preferably 1.23.
Next, while the inside of the reactor body 15 is exhausted by the decompressor 14 via the pipe 29, the mixed gas is discharged from the discharge portion 21 into the reactor body 15 at an average discharge rate from the discharge portion 21, for example, in a rage of 1 m/s to 6 m/s, and then the mixed gas is burned. In this instance, throughput of the decompressor 14 is adjusted so that the inside of the reactor body 15 is maintained under reduced pressure, for example, in a range of 20 torr to 180 torr, preferably with the lower limit of 30 torr and the upper limit of 100 torr, and more preferably at 80 torr.
Here, (V·P) which is the product of the average discharge rate V m/s of the hydrocarbon-containing material gas and the oxygen-containing gas and the pressure P torr of the inside of the fullerene reactor 11 is controlled in a range of 30 to 1000.

Since the mixed gas of the toluene gas and the oxygen gas is thoroughly mixed before being supplied to the inside of the reactor body 15, combustion of the toluene progresses uniformly and the temperature inside the reactor body 15 can be uniform and a high temperature (e.g., in a range of 1600 to 2100°C, preferably in a range of 1700 to 1900°C).
Moreover, since the C/O ratio is controlled in the predetermined range, when unbumed toluene is heated and decomposed, production of the soot-like material is restrained and a large quantity of fullerene precursors are produced. Accordingly, frequency of collisions among the produced fullerene precursors is increased, and consequently a fullerene production rate becomes high and fullerene yield can be improved.
To further raise the temperature of the combustion gas, the mixed gas is preferably preheated before being discharged into the reactor body 15. For this reason, the heat exchangers 22 and 23 are provided in the hydrocarbon-containing material gas supply piping 17 and the oxygen-containing gas supply piping 18, respectively, and the toluene gas and the oxygen gas are thermally treated before being supplied to the mixing chamber 19 of the burner 16. The toluene gas and the oxygen gas are premixed in the mixing chamber 19 to be the mixed gas and the mixed gas is discharged from the discharge portion 21 into the fullerene reactor 11 to be combusted. Thus, it is preferable to operate the respective heat exchangers 22 and 23 in such a manner that the temperature of the mixed gas would become equal to or higher than vaporization temperature of toluene but lower than autoignition temperature of toluene. Furthermore, to maintain the gas state, the temperature of the mixed gas is preferably in a range that is higher than the vaporization temperature of toluene by 10°C or more, still preferably by 20°C or more. Moreover, to prevent self-combustion etc., the temperature of the mixed gas is preferably in a range that is lower than the autoignition temperature of toluene by 10°C or more, still preferably by 20°C or more.

In a case where the toluene gas and the oxygen gas are separately introduced into the fullerene reactor 11 without providing the mixing chamber 19, ignition is unlikely to occur at the upstream side of the fullerene reactor 11, and thus no upper limit is set for preheating temperature of the oxygen gas. However, since the toluene gas carbonizes at around 300°C, the preheating temperature is preferably equal to or lower than the carbonizing temperature of the toluene gas to prevent blockage of the hydrocarbon-containing material gas supply piping 17.
Furthermore, it is preferable to thermally treat both of the toluene gas and the oxygen gas, however, in some cases, either one of the toluene gas and the oxygen gas may be preheated. The hydrocarbons used as a material include, for example, aromatic hydrocarbons, carboniferous hydrocarbons, acetylenic unsaturated hydrocarbons, ethylene hydrocarbons or aliphatic saturated hydrocarbons besides the toluene, and these may be used alone or in combination at given ratio. The aromatic hydrocarbons include, for example, benzene, xylene, naphthalene, and anthracene. The carboniferous hydrocarbons include, for example, creosote oil and carboxylic acid oil. The aliphatic saturated hydrocarbons include, for example, pentane and hexane.
Among these, refined hydrocarbons are preferred for use, and the aromatic hydrocarbons are particularly preferred. Preferably, purity of the hydrocarbon-containing material gas is high, however, the hydrocarbon-containing material gas may be diluted with inert gases such as an argon gas to control the combustion temperature and concentration of the hydrocarbon-containing material gas during a combustion reaction. As the oxygen-containing gas, an oxygen gas having an oxygen concentration of 99% or more, a gas prepared by diluting an oxygen gas having an oxygen concentration of 99% or more with an inert gas such as nitrogen or an argon gas, air or the like is used.

Next, explanation will be made on combustion and decomposition of the toluene under the oxygen in a case where the mixed gas is discharged into the reactor body 15 at a prescribed rate, and further, on a state of fullerene production. The mixed gas is discharged from the discharge portion 21 of the burner 16 at an average discharge rate higher than 0.75 m/s but not higher than 10 m/s, preferably in a range of 1 m/s to 6 m/s, and therefore, a great amount of materials can be put into one burner. Moreover, since an oxidizing agent having a high concentration of oxygen is used, the temperature of the combustion gas in the reactor body 15 becomes high, for example, in a range of 1600°C to 2100°C, preferably in a range of 1700°C to 1900°C. Therefore, unburned toluene is easily heated, decomposed and vaporized, and further diffused into the combustion gas generated by the combustion of the toluene. In this state, a great amount of the mixed gas enters the reactor body 15, and a noticeable jet flow of the mixed gas is formed at the downstream side of the discharge portion 21. Accordingly, it is understood that formation of a uniform flow of the combustion gas containing decomposed products of the toluene running from the upstream side (the burner 16 side) to the downstream side of the fullerene reactor 11 is promoted.

The inside of the reactor body 15 is maintained under reduced pressure with the lower limit of the pressure being 20 torr, preferably 30 torr and the upper limit being 100 torr, preferably 80 torr, and (V·P) which is the product of the average discharge rate V m/s of the hydrocarbon-containing material gas and the oxygen-containing gas and the pressure P torr inside the fullerene reactor 11 is adjusted in a range of 30 to 1000. Accordingly, uniform combustion of the toluene is promoted and it is understood that the temperature of the combustion gas is substantially uniform in a vertical direction to an axial direction of the reactor body 15.
As a result, it becomes difficult for a self-circulating flow to be generated in the combustion gas flow. Accordingly, a uniform flow of the combustion gas running from the upstream side to the downstream side in the reactor body 15 is stabilized.
Moreover, by providing the burner 16 on an upper side in a vertical direction of the fullerene reactor 15, the combustion gas flows downward by gravity, by which stabilization of the flow is assured. Furthermore, the combustion gas in the reactor body 15 is exhausted by the decompressor 14 via the pipe 29 connected to the exhaust port 27.

It is understood that the decomposed products of the toluene diffused into the combustion gas are heated by the combustion gas and turn into the fullerene precursors, and then the fullerene precursors repeat collisions with each other, thereby transforming into the fullerenes. Since the flow of the combustion gas containing the decomposed products of the toluene is the uniform flow running from the upstream side to the downstream side in the reactor body 15, the decomposed products of the toluene in the combustion gas are restrained from moving nonuniformly, and thus the retention times of the decomposed products of the toluene in the combustion gas become uniform. Therefore, it is understood that the fullerene precursors are produced stably from the decomposed products of the toluene. Moreover, the nonuniform movement of the produced fullerene precursors in the combustion gas is restrained, and thus the retention times of the fullerene precursors in the combustion gas become uniform. Therefore, it is understood that fullerenes are stably produced from the fullerene precursors. As a result, it is understood that the fullerene yield with respect to the carbon in the toluene becomes 0.5% or more by mass but not more than 1% by mass, and the fullerene content in the soot-like material is more than 7% by mass but not more than 50% by mass, preferably 10% or more by mass but not more than 25% by mass.

As described above, it has been found that the fullerene yield and the fullerene content in the soot-like material are both improved by discharging the mixed gas from the burner 16 into the reactor body 15 at a high average discharge rate. Here, discharging the mixed gas at such a high average discharge rate means to increase the amount of the mixed gas supplied to the fullerene reactor 11 per unit time, and consequently supply of the materials for fullerenes supplied to the fullerene reactor 11 is increased. Accordingly, by increasing the supply of the materials for fullerenes, the fullerene yield and the fullerene content in the soot-like material can be maintained at a high level, and thus the fullerene production can be greatly improved.

### EXPERIMENTS

Next, experiments conducted to confirm functions and effects of the present invention will be described.
In producing fullerenes, respective pieces of the fullerene producing equipment 10 and 32 used in the aforementioned embodiments were used, and a toluene gas and pure oxygen were used as the hydrocarbon-containing material gas and the oxygen-containing gas, respectively. Toluene was once heated by a vaporizer to be turned into a gas state, and then the toluene gas was heated to around 140°C by the heat exchanger 22. Meanwhile, the oxygen gas was supplied from an oxygen tank to the heat exchanger 23 where the oxygen gas was heated to 140°C. The heated toluene gas and oxygen gas were premixed in the burner 16 and discharged into the fullerene reactor 11 as a mixed gas.

The discharge portion 21 of the burner 16 used is made using a disc-shaped porous sintered body of ceramics having an outside diameter of 250 mm, and 30 to 50 holes are provided per 25 mm in the porous sintered body of ceramics as discharge holes.
Furthermore, the fullerene reactor 11 has a length of 2000 mm and a diameter of 300 mm, and on the inner wall of the fullerene reactor 11, a lining layer is formed by, for example, alumina unshaped refractories in a range of 400 mm from a part corresponding to the surface (tip portion) of the burner 16 toward the downstream side. A burner and a reactor used in the following experiments and comparable experiments have configurations substantially identical to those of the burner 16 and the reactor 11 described above.

The exhaust port 27 for the gas containing the soot-like material generated from the reactor 11 used in the fullerene producing equipment 10 has an inside diameter of 150 mm, and the gas cooling unit 28 comprises a stainless steel pipe with an inside diameter of 150 mm and a length of 5000 mm, whose exterior is cooled by water.
Meanwhile, the exhaust port of the exhaust portion 35 provided in the reactor 11 used in the fullerene producing equipment 32 has an inside diameter of 200 mm, and the gas cooling unit 31 comprises a stainless steel pipe with an inside diameter of 600 mm and a length of 1500 mm, whose exterior is cooled by water.
Table 2 shows production conditions and results of Comparative Experiments 1 to 3 in which the fullerene producing equipment 10 illustrated in FIG.1 was used. Table 1, Table 3 and Table 4 show production conditions and results of Experiments 1 to 16 in which the fullerene producing equipment 32 illustrated in FIG. 2 was used. In each case, the respective pieces of the fullerene producing equipment 10 and 32 were operated continuously for 100 hours or more to produce fullerenes stably.

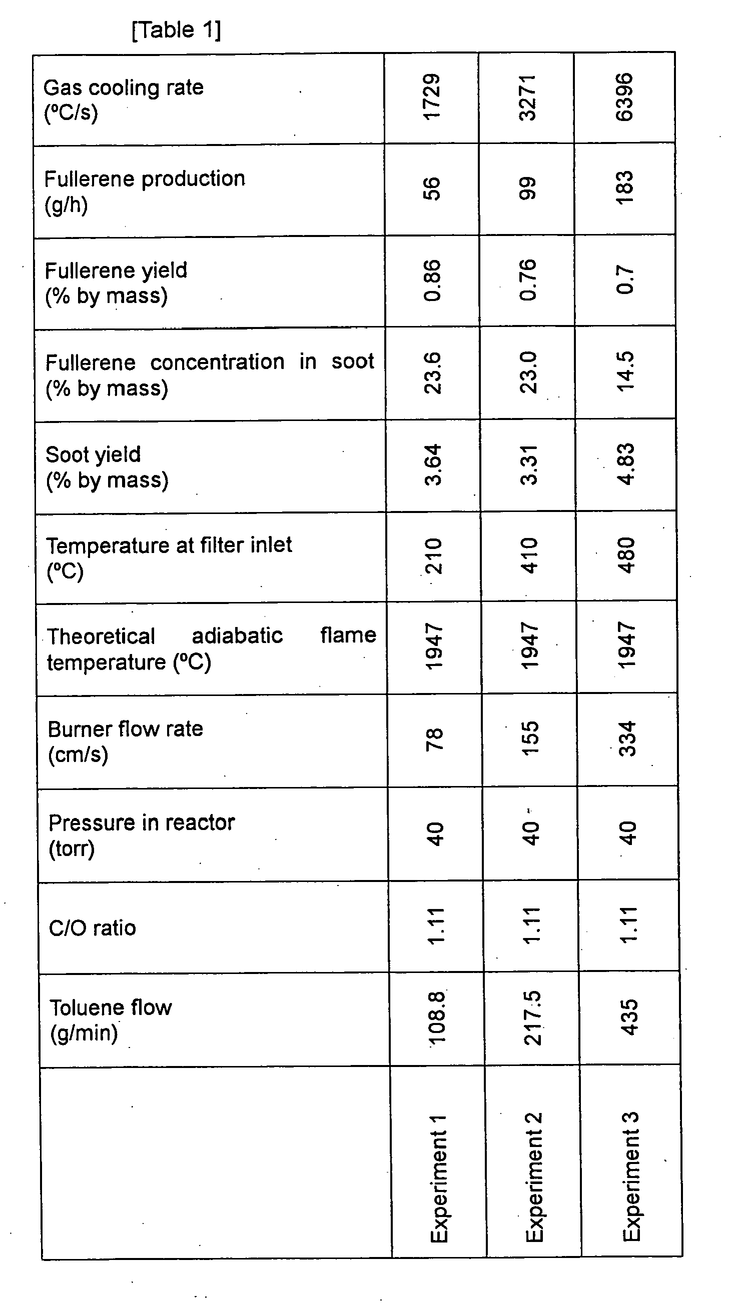

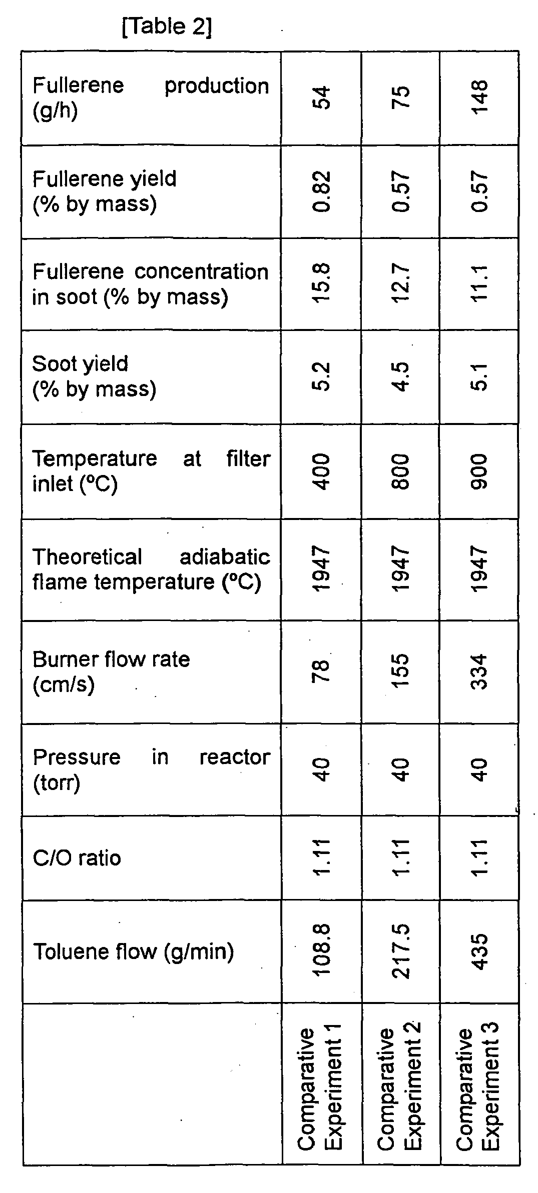

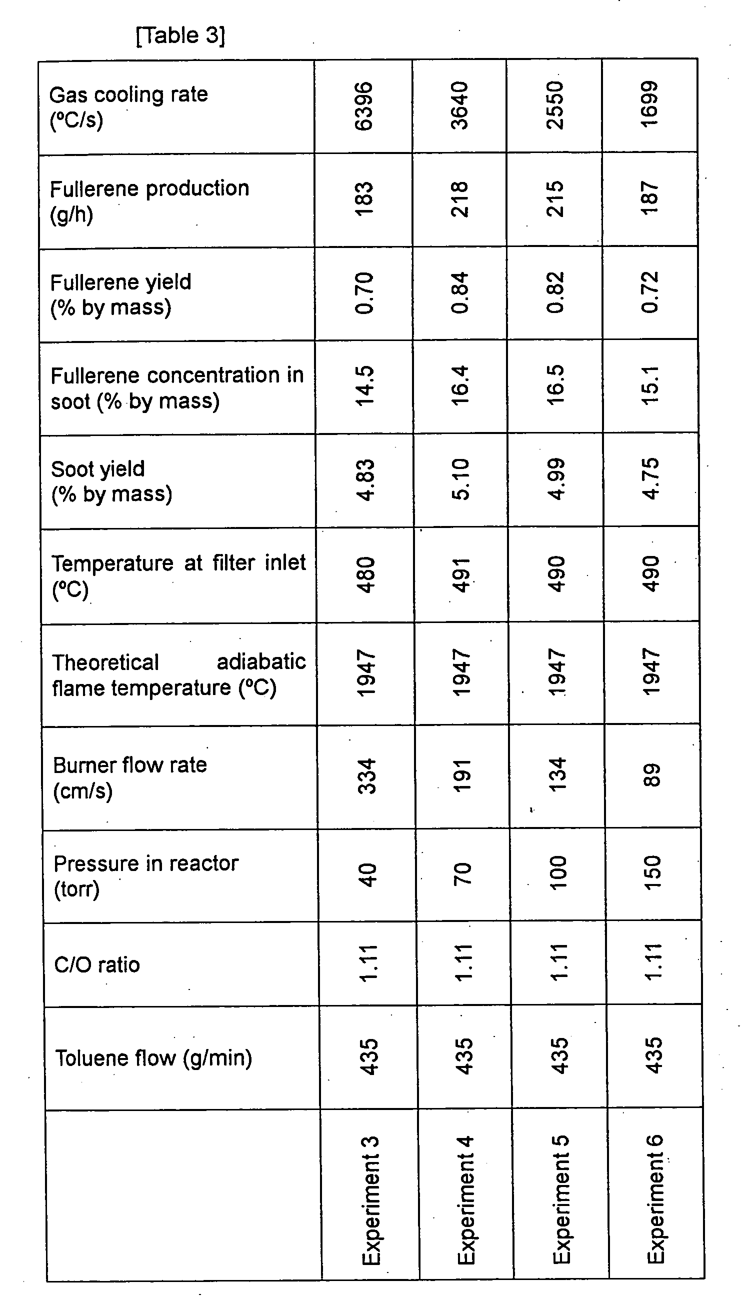

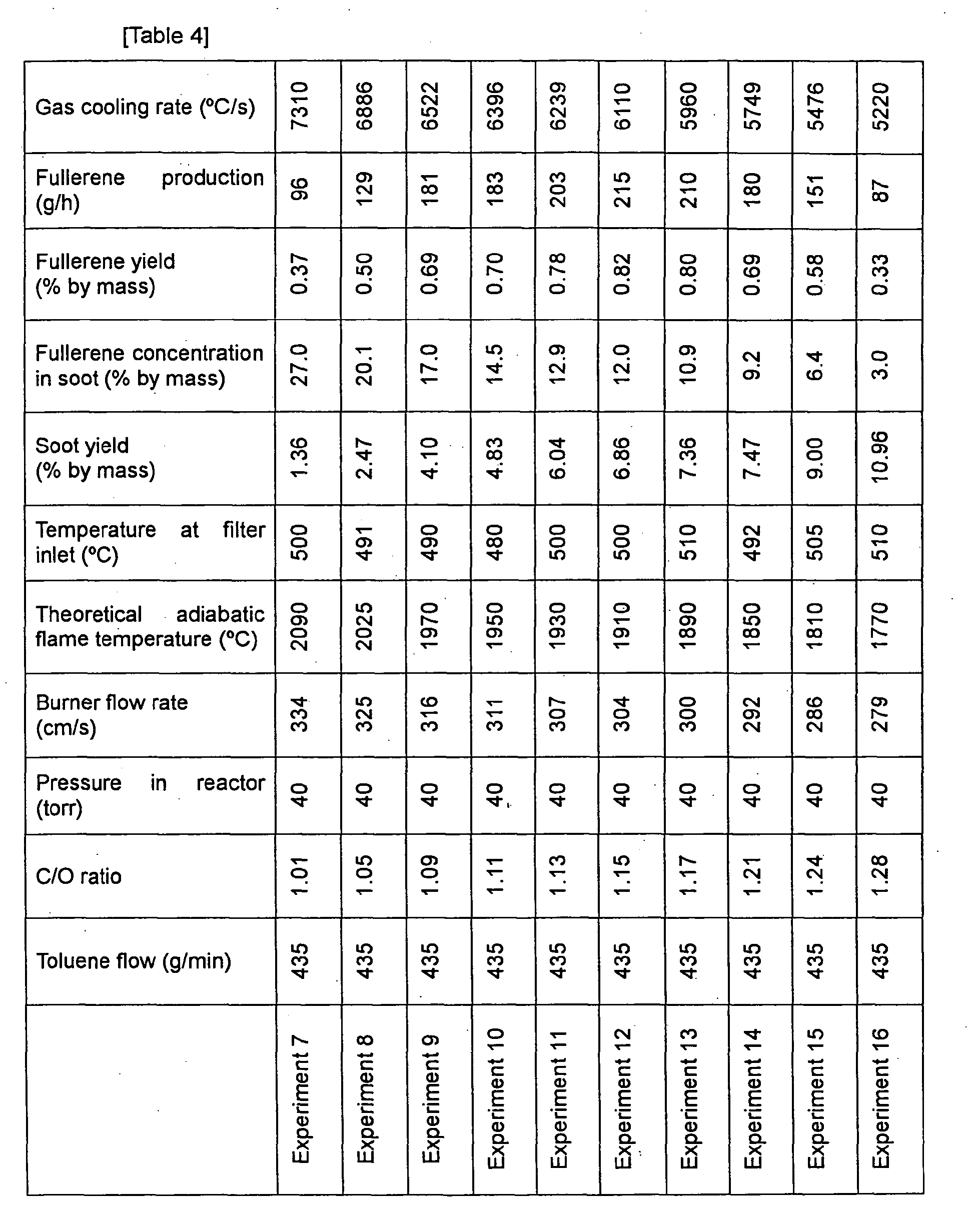

Meaning of each word in each of the above tables and an analysis method are as follows.
Soot yield: Weight ratio of soot recovered by a bag filter with respect to weight of toluene used per unit time.
Fullerene concentration in soot-like material (hereinafter, simply referred to as fullerene concentration in soot): Fullerene concentration in soot was measured by the below method taking advantage of fullerenes' solubility in organic solvents such as toluene by using a high performance liquid chromatography (HPLC).
(1) 0.015 g of soot sample was precisely weighed in a 10 ml-screw-cap vial (A).
(2) Next, 7 ml (6 g) of trimethylbenzene was added to the soot and an amount of the added solvent was precisely weighed (B).
(3) After mixing, the resultant solution was treated with ultrasound for 15 minutes and then cooled to a room temperature.
(4) Dismic filter(0.2 µm - PTFE) was placed in a plastic injector.
(5) About 1 ml of sample was added to the injector and filtrated into a vial.
(6) An HPLC analysis was conducted. Dilution ratio B/A in (1) and (2) was approximately 400.

Conditions of the HPLC analysis are as follows.
HPLC device: Agilent-made 1100, eluent: 48 vol% toluene/MeOH, 0.8 ml/min, column: YMC-Pack, ODS-AM, S-3 µm, 12 nm, 75 mm·4.6 mmlD, column temperature: 40°C, and wave length: 308 nm
By using this method, for example, one or more of C₆₀, C₇₀, C₇₆, C₇₈, C₈₂, C₈₄, C₈₆, C₈₈, C₉₀, C₉₂, C₉₄, C₉₆ and higher fullerenes were detected as fullerenes.
Fullerene yield: Weight ratio of produced fullerenes with respect to weight of toluene used per unit time.

### (Experiments 1-3)

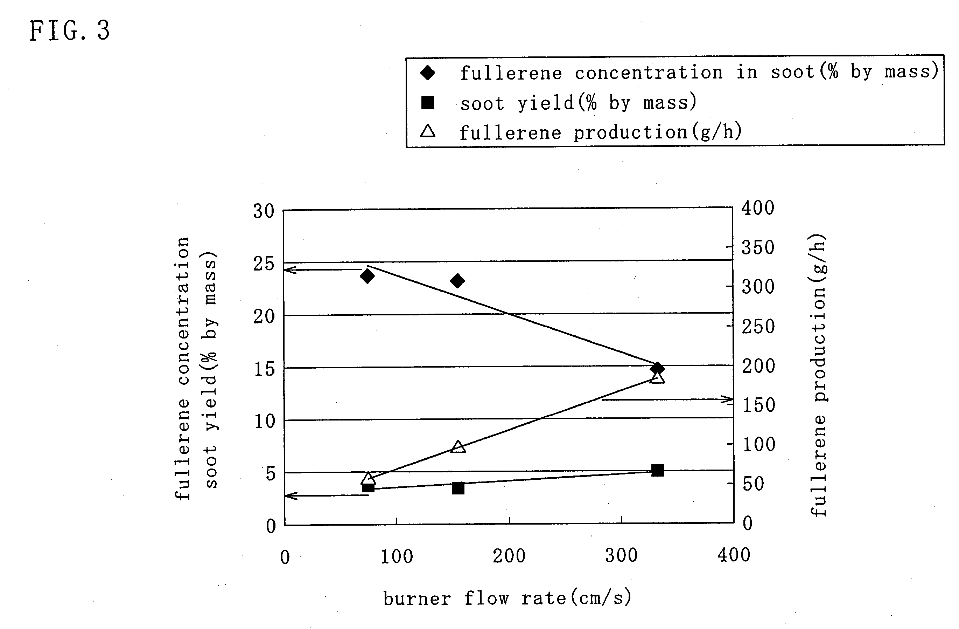

Fullerenes were produced under each condition shown in Table 1 by using the fullerene producing equipment 32 illustrated in FIG. 2.
As illustrated in Table 1 and FIG. 3, as the average discharge rate of the gas discharged from the burner (hereinafter, also referred to as burner flow rate) was increased to 78 cm/s (V·P=31.2), 155 cm/s (V·P=62) and 334 cm/s (V·P=133.6), fullerene concentration in soot slightly decreased to 23.6% by mass, 23.0% by mass and 14.5% by mass, respectively. However, since input of toluene to the burner was large, fullerene production (output) increased to 56 g/h, 99 g/h and 183 g/h, respectively. Here, the burner flow rate may be increased further

### (Comparative Experiments 1-3)

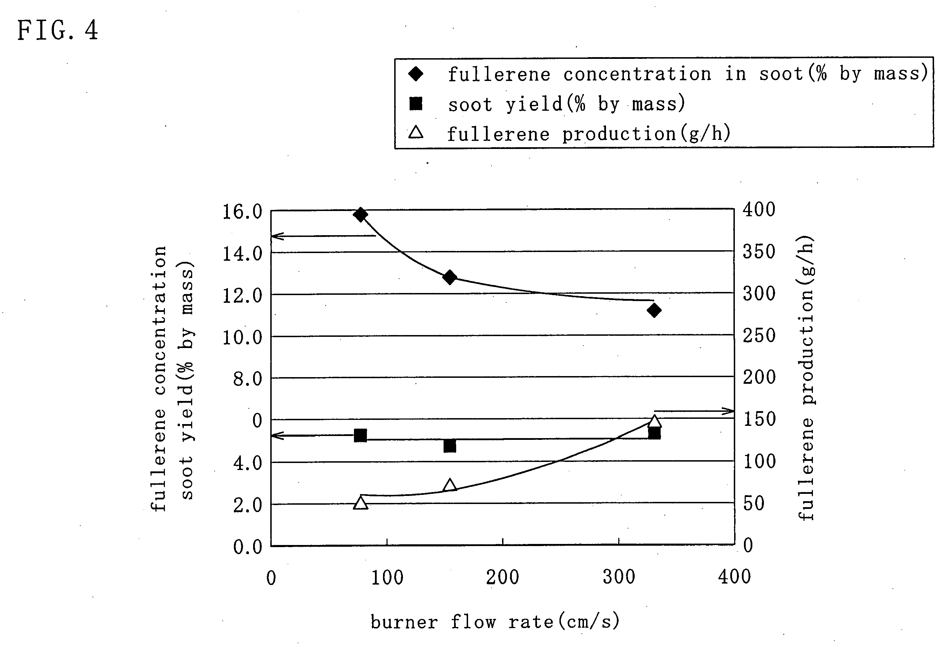

Using the fullerene producing equipment 10 illustrated in FIG. 1, fullerenes were produced under each condition shown in Table 2.
Production conditions were substantially the same as those of the experiments in Table 1, however, since a swirling-flow-type cooling device, namely the gas cooling unit 31, in the fullerene producing equipment 32 was not provided, the temperature at the inlet of the bag filter became higher compared with Experiments 1 to 3. In the all cases, particularly in Comparative Experiments 2 and 3 where the burner flow rates are high, the fullerene concentration in soot decreased and the fullerene production decreased as illustrated in FIG. 4. Particularly in the Comparative Experiments 2 and 3, the temperature at the inlet of the bag filter is as high as 800 to 900°C, which exceeds the upper temperature limit of the bag filter. Thus, although continuous operation longer than conventional methods was feasible, continuous operation longer than a case of using the fullerene producing equipment 32 was unfeasible.
From the results of Experiments 1 to 3 and Comparative Experiments 1 to 3, it was confirmed that the fullerene production is increased significantly by increasing the burner flow rate, and the fullerene production efficiency can be increased by keeping the temperature at the inlet of the bag filter at or below 700°C.

### (Experiments 3-6)

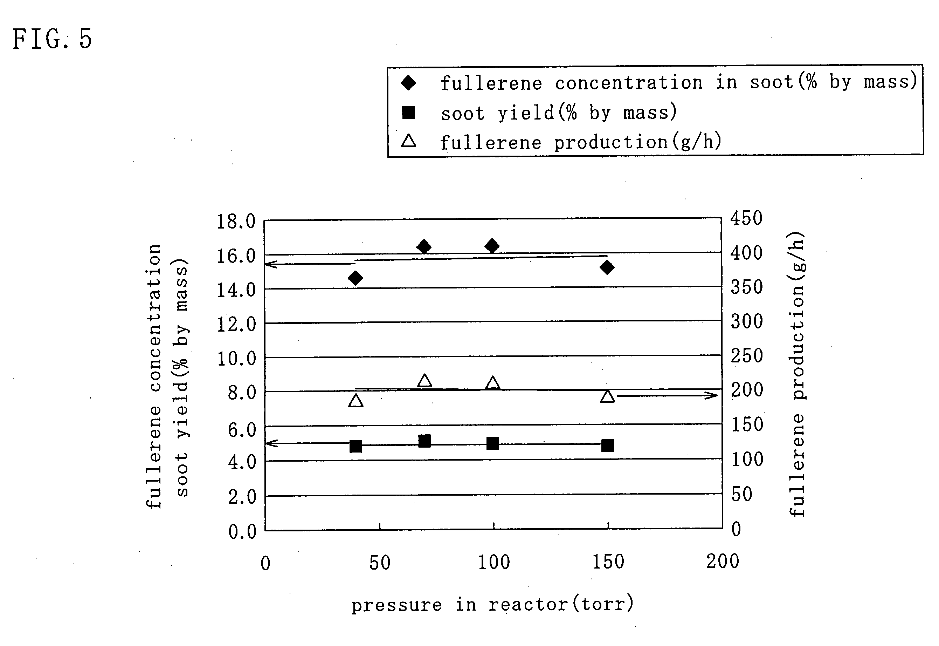

Using the fullerene producing equipment 32 illustrated in FIG. 2, fullerenes were produced under each condition shown in Table 3. In these experiments, the pressure in the reactor was varied.
As shown in Table 3 and FIG. 5, even though the pressure in the reactor was varied in a range of 40 to 150 torr (V·P=133.5 to 134), the fullerene concentration in soot and the fullerene production were maintained stably. In this case, when the pressure in the reactor was raised, the burner flow rate decreased with the pressure, but flame was stably maintained until the burner flow rate became 89 cm/s. However, when the burner flow rate became 75 cm/s or less by further raising the pressure in the reactor, a backfire phenomenon occurred in the burner, and thus it was difficult to maintain the flame stably.

### (Experiments 7-16)

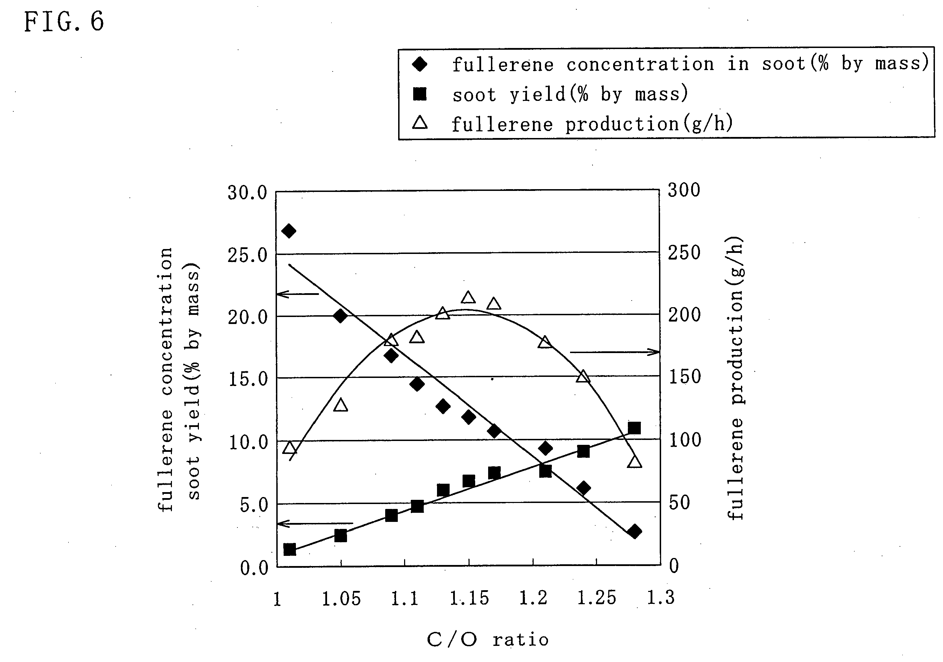

Using the fullerene producing equipment 32 illustrated in FIG. 2, fullerenes were produced under each condition shown in Table 4. In these experiments, the C/O ratio of the fuel was varied.
As illustrated in FIG.6, even though a toluene flow was the same, when the C/O ratio was low, the fullerene concentration in soot became high but the soot yield became low, and accordingly the fullerene production became small. On the other hand, when the C/O ratio was high, the fullerene concentration in soot became low and the soot yield became high. Furthermore, the fullerene production was maximum when the C/O ratio was in the vicinity of 1.15 to 1.17.
Accordingly, it is presumed that when the elemental ratio of carbon in toluene with respect to oxygen is less than 1.00 or more than 1.28, the fullerene yield decreases extremely. In particular, when the C/O ratio was 1.01 or more and 1.23 or less, the fullerene concentration in soot exceeded 7% and fullerenes were produced more than the conventional methods.

The embodiments of the present invention and the experiments to confirm functions and effects thereof have been described above. However, the present invention is not limited to these embodiments or experiments, and changes may be made in each of the configuration described in the description, and the scope of the present invention includes a case where the method for producing fullerenes according to the present invention comprises a part of or all of the above respective embodiments and modifications. For example, the toluene gas and the oxygen gas respectively heated by the heat exchangers are supplied through separate piping to the burner, and discharged into the reactor body after being mixed in the burner. Alternatively, the toluene gas and the oxygen gas heated respectively by the heat exchangers may be mixed by a mixer to be in a mixed gas state and then supplied to the burner having no mixing chamber and discharged into the fullerene reactor body. Also in this case, each heat exchanger is operated in such a manner that the temperature of the mixed gas would become equal to or higher than the vaporization temperature of toluene but lower than the autoignition temperature of toluene.

Further alternatively, the toluene gas and the oxygen gas respectively heated by the heat exchangers may be discharged into the fullerene reactor from the discharge portion provided in the fullerene reactor, and burned in the fullerene reactor while being diffused and mixed. In this case, a heating temperature range of the toluene gas becomes equal to or higher than the vaporization temperature but lower than the carbonizing temperature. Moreover, a heating temperature range of the oxygen gas is not particularly limited as long as the temperature range is equal to or higher than the vaporization temperature of toluene but lower than the ignition temperature for a case of mixing the toluene and oxygen gas.
The burner is provided on the upper end side (above in the vertical direction) of the fullerene reactor body. Alternatively, the burner may be provided on an upper side of a side portion of, or on a lower end side (below in the vertical direction) of the fullerene reactor. Further alternatively, a burner may be provided separately to each discharging hole, and a mixing chamber and an accumulator may be disposed to the each burner. Although the discharge portion formed by a plate made of the porous sintered body of ceramics is used as the discharge portion used in the burner, a discharge portion made of heat-resisting steel such as stainless steel may be used. Furthermore, a burner comprising a discharge portion where minute-diameter nozzles made of stainless heat-resistance steel are concentrated may be used.

### INDUSTRIAL APPLICABILITY

In the method for producing fullerenes according to the present invention, the average discharge rate of the hydrocarbon-containing material gas and the oxygen-containing gas discharged from the discharge portion into the fullerene reactor is higher than 0.75 m/s but not higher than 10 m/s (preferably in a range of 1 m/s to 6 m/s). Thereby, the supply of the materials for fullerenes is increased, and thus it becomes possible to produce fullerenes at a high production of around 87-600 g/h. Accordingly, fullerene production per unit time can be increased compared with the conventional methods.
Moreover, by controlling (V·P) which is the product of the average discharge rate V m/s of the hydrocarbon-containing material gas and the oxygen-containing gas discharged from the discharge portion and the pressure P torr in the fullerene reactor in a range of 30 to 1000, the hydrocarbon-containing material gas and the oxygen-containing gas can be burned in a diluted state in the fullerene reactor, the temperature in the fullerene reactor can be more uniform and also high, and therefore the fullerene production rate can be raised.
As a result, combustion progresses uniformly, and thus the fullerene production efficiency in the fullerene reactor is improved and the fullerene production can be further increased.

## Claims

1. A method for producing fullerenes in which a hydrocarbon-containing material gas and an oxygen-containing gas are discharged from a discharge portion provided in a fullerene reactor into the fullerene reactor and burned, **characterized in that**:
an average discharge rate of the hydrocarbon-containing material gas and the oxygen-containing gas discharged from the discharge portion into the fullerene reactor is higher than 0.75 m/s but not higher than 10 m/s.

2. The method for producing fullerenes according to claim 1,
wherein the average discharge rate of the hydrocarbon-containing material gas and the oxygen-containing gas discharged from the discharge portion is in a range of 1 m/s to 6 m/s.

3. The method for producing fullerenes according to claim 1 or 2,
wherein (V·P) is in a range of 30 to 1000, with V m/s being the average discharge rate of the hydrocarbon-containing material gas and the oxygen-containing gas and P torr being a pressure in the fullerene reactor.

4. The method for producing fullerenes according to one of claims 1 to 3,
wherein a gas containing a soot-like material introduced into a soot-like material recovery device from the fullerene reactor has been cooled to be in a temperature range of 200°C to 700°C.

5. The method for producing fullerenes according to claim 4,
wherein the gas containing the soot-like material exhausted from the fullerene reactor is cooled at a cooling rate of 1000 °C/s or higher until reaching the recovery device.

6. The method for producing fullerenes according to claim 4 or 5,
wherein the gas containing the soot-like material exhausted from the fullerene reactor is cooled by forming a swirling flow in a pipe with a periphery cooled by a cooling medium.

7. The method for producing fullerenes according to one of claims 1 to 6,
wherein an elemental ratio of carbon in the hydrocarbon-containing material gas with respect to oxygen in the oxygen-containing gas is in a range of 1.00 to 1.56 at a time of burning of the hydrocarbon-containing material gas.

8. The method for producing fullerenes according to one of claims 1 to 7,
wherein the oxygen-containing gas has an oxygen concentration of 99% or more.

9. The method for producing fullerenes according to one of claims 1 to 8,
wherein the hydrocarbon-containing material gas is preheated before being discharged from the discharge portion into the fullerene reactor.

10. The method for producing fullerenes according to one of claims 1 to 9,
wherein the oxygen-containing gas is preheated before being discharged from the discharge portion into the fullerene reactor.

11. The method for producing fullerenes according to one of claims 1 to 10,
wherein a burner with the discharge portion is provided at an upper portion of the fullerene reactor, and an exhaust portion for exhausting the gas containing the soot-like material produced in the fullerene reactor is provided at a lower portion of the fullerene reactor.

12. The method for producing fullerenes according to one of claims 1 to 11,
wherein a fullerene content in the soot-like material produced in the fullerene reactor is more than 7% by mass but not more than 50% by mass.
